# EUROPÄISCHE PATENTSCHRIFT

(11) **EP 2 916 161 B1**
(45) Veröffentlichungstag und Bekanntmachung des Hinweises auf die Patenterteilung: **20.07.2016**
(21) Anmeldenummer: 15153947.5
(22) Anmeldetag: 05.02.2015
(51) Int. Cl.: G02B 23/00, G02B 23/02, G02B 25/00

(54) **Schnittweiten-Extender**
Back focus extender
Prolongateur de distance focale

(30) Priorität: 27.02.2014 DE 102014102638
(43) Veröffentlichungstag der Anmeldung: 09.09.2015
(73) Patentinhaber: Leica Camera AG, 35578 Wetzlar (DE)
(72) Erfinder: Kammans, Sigrun, 35745 Herborn (DE); Hartmann, Michael, 35619 Braunfels (DE); Köhler-Schmitt, Romy, 35440 Linden (DE)
(74) Vertreter: Stamer, Jan

(56) Entgegenhaltungen:
- DE-A1- 10 137 981
- GB-A- 2 404 993
- US-A- 4 571 036

## Beschreibung

Die Erfindung betrifft einen Schnittweiten-Extender für Fernrohre mit auswechselbaren Okularen, der aus einem zylindrischen Gehäuse mit in Lichtrichtung ersten und zweiten senkrecht zur Zylinderachse stehenden Anschlagebenen mit zugehörigen Verbindungselementen zum Fernrohr und zum auswechselbaren Okular besteht.

Solche Extender sind insbesondere bei fotografischen Aufnahme-Kameras bekannt, um unterschiedliche Schnittweiten auswechselbarer Aufnahme-Objektive an den Abstand zwischen der Anriegelebene der Objektive an der Kamera und der Filmebene auszugleichen. Es handelt sich dabei um Gehäuse ohne eigene Abbildungsoptik.

Außerdem sind Brennweiten-Extender für auswechselbare Objektive an Kameras bekannt, die an die durch die Kamera vorgegebene Schnittweite angepasst sind. Die in das Gehäuse des Brennweiten-Extenders eingesetzten optischen Elemente ergeben zusammen mit den optischen Elementen des Wechselobjektivs eine vergrößerte Gesamtbrennweite. Die optischen Elemente des Extenders sind vollständig innerhalb des Gehäuses des Extenders zwischen den mechanischen Anriegelebenen und Verbindungselementen angeordnet.

Außerdem ist es bei optischen Beobachtungsgeräten, insbesondere Teleskopen, bekannt, auf das Okular Adapter für Bildaufnahmegeräte aufzusetzen.

Aus der Druckschrift GB 2 404 993 A ist ein Okularadapter für ein Kamera-Objektiv bekannt.

Aus der Druckschrift US 6 781 630 B2 ist ein Kamera-Adapter für ein Mikroskop-Okular bekannt. Der Adapter weist Anschlagflächen zum Mikroskop-Okular und für eine CCD-Kamera auf. In den Adapter ist ein Linsensystem zur Übertragung des im Okular erzeugten Bildes auf die Bildebene der CCD-Kamera eingesetzt.

Aus der Druckschrift DE 10 2006 000 754 A1 ist eine Vorrichtung zur Befestigung von Bildaufnahmegeräten an einem Beobachtungsfernrohr bekannt. Die Vorrichtung enthält zwei koaxial zueinander verschiebbare Zylinder und Klemmvorrichtungen zur Befestigung der Zylinder an einem Okular des Beobachtungsfernrohres und dem Bildaufnahmegerät.

Aus der Druckschrift US 2014/0022646 A1 ist eine Adapter-Hülse zum Aufsetzen auf ein Teleskop-Okular bekannt. In dem Adapter können Aufnahme- oder Meß-Geräte gehalten werden.

Aus der Druckschrift JP 2006 126 582 A ist ein zweiteiliger Adapter bekannt, dessen einer Teil auf das Okular eines Teleskops aufsetzbar und dessen anderer Teil an einer Kamera befestigbar ist. Beide Adapterteile können zum Übergang zwischen Beobachtung und Bildaufnahme voneinander gelöst werden.

Fernrohre, insbesondere Spektive, sind üblicherweise mit Okularen fester Brennweite oder Zoom-Okularen für die gebräuchlichsten Beobachtungsanforderungen ausgestattet. Für besondere Anwendungen werden jedoch zusätzliche Beobachtungs-Vergrößerungen gewünscht, die durch die gebräuchlichen Okulare nicht erzeugt und für diese Anwendungen auch nicht angeboten werden. Unabhängig davon würden sie eine nicht unerhebliche Gewichtsbelastung der Ausrüstung darstellen, die von den Anwendern nicht akzeptiert wird.

Aufgabe der Erfindung ist es daher, eine Möglichkeit der Vergrößerungs-Änderung anzugeben, die einfach zu realisieren ist, sowie kostengünstig und als leichtgewichtiges Zusatzteil zur Verfügung gestellt werden kann.

Diese Aufgabe wird bei einem Schnittweiten-Extender der eingangs genannten Art erfindungsgemäß durch die kennzeichnenden Merkmale des Anspruchs 1 gelöst, Vorteilhafte Weiterbildungen ergeben sich aus den Merkmalen der Unteransprüche.

An die Wechselfläche für das Okular wird mit dem Extender eine Zwischenoptik negativer Brechkraft adaptiert. Die Objekt- und Bildlage der Zwischenoptik werden so gewählt, dass einerseits der gewünschte Vergrößerungsfaktor und andererseits die Abbildungslänge der Zwischenoptik der mechanischen Länge des Extenders entsprechen.

Die mechanische Verbindung des Extenders erfolgt auf beiden Seiten über die gleichen Verbindungselemente wie die für das Wechselokular. Da die Verbindungselemente gegenüber der jeweiligen Verbindungsfläche um ca. 15 mm vorstehen, stellt die mechanische Länge des Extenders eine wesentliche Größe bei der Berechnung der Zwischenoptik dar.

Aus Gründen der angestrebten Gewichtsersparnis und Kompaktheit des Schnittweiten-Extenders soll die Dicke B zwischen den Anschlagebenen des Gehäuses möglichst klein sein. Eine mechanische Grenze wird durch die notwendigen Abmessungen für die zugehörigen Verbindungselemente gesetzt. Eine weitere Bedingung ergibt sich aus dem gewünschten Vergrößerungsfaktor β' im Vergleich zu bereits vorhandenen Vergrößerungen der Wechsel-Okulare und dazu notwendigen negativen Brechkräfte der Relay-Linse. Kleinere Schnittweiten-Veränderungen können dabei vorteilhaft durch eine einzelne Relay-Linse realisiert werden. Für größere Schnittweiten-Verlängerungen werden unter Umständen mehrere Linsen als Relay-Linse benötigt, deren Fassung in der Halterung des Extender-Gehäuses mit einem größeren Kosten- und Zeitaufwand für Justierung und Herstellung einer dichten Fassung verbunden ist. Je nach Abstand der optisch wirksamen Flächen der Relay-Linsen-Anordnung voneinander sind die wirksamen Abstände auf die optischen Hauptebenen der Relay-Linsen-Optik zu beziehen.

Die durch die Relay-Linse gebildete Zwischenoptik besteht vorzugsweise aus einem Achromäten. Sie kann aber auch ein oder mehrere asphärische Flächen, Grin-Linsen oder DOEs enthalten. Das subjektive Sehfeld des Wechsel-Okulars wird durch die Zwischenoptik nicht oder sehr gering beschnitten.

Die erfindungsgemäß als vorzugsweise angegebenen Zahlenwerte für die optischen und mechanischen Bauteile können unter Berücksichtigung von Fertigungstoleranzen und individuellen Anpassungsmaßnahmen zusätzlich um +/- 5% abweichen.

Bezugsgröße bei der Angabe von Abstandswerten s, s' zu optischen Systemen ist üblicherweise deren Hauptebene H. Bei sogen. dicken Linsen, die entweder als Einzellinse eine größere Mittendicke aufweisen oder bei Kittgliedern und Systemen aus mehreren Einzellinsen, sind dagegen in Lichtrichtung gesehen eine erste und zweite Hauptebene H, H' die entscheidenden Bezugsebenen, sowie deren Abstand ΔHH' voneinander.

Als zusätzlicher Vergrößerungsfaktor β' zu den durch bekannte Okulare vorgegebenen Vergrößerungen hat sich ein Wert von ca. 1,8-fach ergeben, der sich sowohl mit einem günstigen Linsen-Aufwand als auch günstigen Gehäuseabmessungen für den Schnittweiten-Extender realisieren lässt.

Eine bevorzugte Dicke B des Extenders und damit der Schnittweiten-Verlängerung OO' = -s + s' + ΔHH' beträgt ca. 30 mm. Eine bevorzugte Brennweite f der Relay-Linse beträgt ca. -44 mm.

Bei diesen optischen und mechanischen Vorgaben liegt der Abstand der Halterung der Relay-Linse vorzugsweise um ca. 20 mm in Lichtrichtung vor der ersten Anschlagebene des Gehäuses des Extenders. Die Halterung ist vorzugsweise als Zylinder mit im Vergleich zur Anschlagebene geringerem Durchmesser ausgebildet.

Bei einem Abstand von ca. 15 mm der Verbindungselemente von den jeweiligen Anschlagebenen können die der ersten Anschlagebene zugeordneten Verbindungselemente auf der äußeren Zylinderfläche der Halterung für die Relay-Linse und die der zweiten Anschlagebene zugeordneten Verbindungselemente innerhalb des Gehäuses des Extenders angeordnet sein.

Der Durchmesser der Relay-Linse beträgt vorzugsweise ca. 14 mm und ist entweder als dünne oder dicke Linse in eine konzentrisch zur Zylinderachse des Gehäuses des Extenders angeordnete Einsetzöffnung in der Halterung eingefügt.

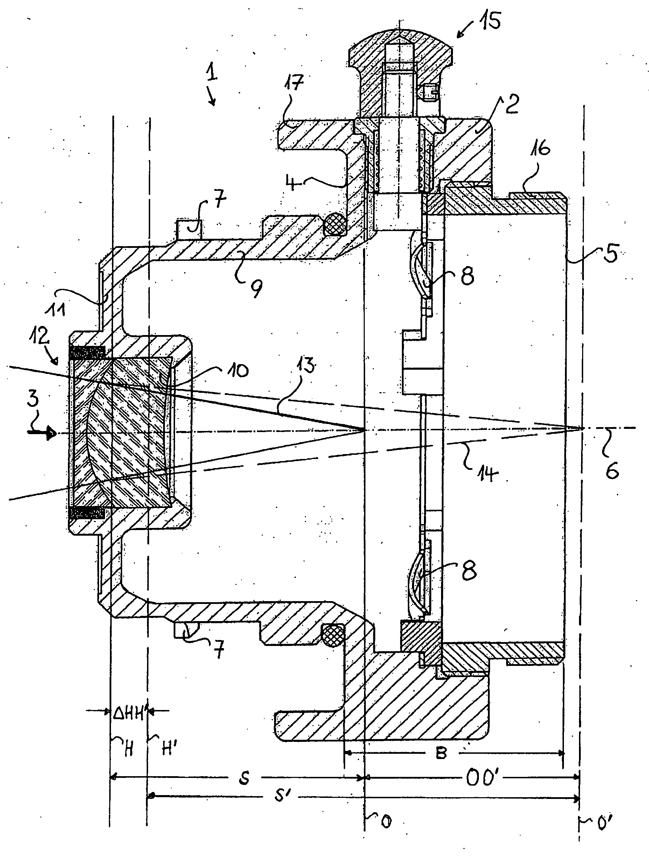

In der Zeichnung ist ein Ausführungsbeispiel schematisch dargestellt und wird nachfolgend anhand der Figur beschrieben.

Der Schnittweiten-Extender 1 besteht aus einem zylindrischen Gehäuse 2, das in Lichtrichtung 3 eine erste Anschlagebene 4 und eine zweite Anschlagebene 5 besitzt. Beide Anschlagebenen 4, 5 stehen senkrecht zur Zylinderachse 6 und haben einen Abstand B voneinander. Den Anschlagebenen 4, 5 sind jeweils Verbindungselemente 7 zum Anriegeln an ein nicht weiter dargestelltes Fernrohr und Verbindungselemente 8 für ein nicht dargestelltes Okular zugeordnet. An die erste Anschlagebene 4 ist eine zylinderförmige Halterung 9 für eine Relay-Linse 10 angeformt. Der Zylinderdurchmesser der Halterung 9 ist geringer als der für den Lichtdurchtritt offene Durchmesser des Gehäuses 2. In der Frontfläche 11 der Halterung 9 ist hier eine Einsetzöffnung 12 für die Relay-Linse 10 vorhanden. Der Durchmesser der Einsetzöffnung 12 ist an den Durchmesser der Relay-Linse 10 angepasst und kann frontseitig durch eine nicht dargestellte Kappe abgedeckt sein, die z.B. zusätzlich eine Schutzglasplatte halten kann. Die Relay-Linse 10 ist als Kittglied aus zwei Negativ-Linsen dargestellt.

Das in ausgezogenen Linien dargestellte, durch die Einsetzöffnung 12 hindurchtretende Lichtbündel 13 entspricht dem von dem nicht dargestellten Fernrohr kommenden Abbildungsstrahlengang ohne eingesetzte Relay-Linse 10. Es erzeugt ein Objektbild in einer dadurch vorgegebenen Objektebene O.

Unter Einwirkung der Relay-Linse 10 wird das Lichtbündel 13 zu dem gestrichelt dargestellten Lichtbündel 14 verlängert, das das Objektbild in die Objektebene O' verlagert. Der Abstand der Objektebenen OO' ist gleich dem Abstand B zwischen den Anschlagebenen 4, 5, wobei die Objektebenen O, O' und die Anschlagebnen 4, 5 nicht übereinstimmen müssen, sondern durch die Vorgaben des Fernrohres und des auswechselbaren Okulars festgelegt sind.

In das Gehäuse 2 ist eine für die Funktion des Schnittweiten-Extenders 1 nicht bedeutsame Verriegelung 15 eingesetzt. Nach dem Ansetzen des Okulars verhindert diese Verriegelung 15 ein unbeabsichtigtes Lösen des Extenders 1 vom Okular. In gleicher Weise kann im Fernrohr eine Verriegelung vorgesehen sein, die ein unbeabsichtigtes Lösen des Extenders 1 von dem Fernrohr verhindert.

Die Verbindungselemente 7, 8 sind im Ausführungsbeispiel an sich bekannte Bajonett-Riegelelemente.

Okularseitig ist an dem Gehäuse 2 ein Gewindeansatz 16 dargestellt. Ein gleicher Gewindeansatz kann am Fernrohr vorhanden sein, der beim Ansetzen des Extenders 1 von dem Zylinderrand 17 überdeckt wird. In gleicher Weise kann der Gewindeansatz 16 von einem entsprechenden Zylinderrand am Okular überdeckt werden. Der Gewindeansatz 16 kann zum Aufschrauben eines Fotoadapters genutzt werden.

### Bezugszeichenliste

- 1: Schnittweiten-Extender
- 2: zylindrisches Gehäuse
- 3: Lichtrichtung
- 4: erste Anschlagebene
- 5: zweite Anschlagebene
- 6: Zylinderachse
- 7: Verbindungselement Fernrohr
- 8: Verbindungselement Okular
- 9: Halterung Relay-Linse
- 10: Relay-Linse
- 11: Frontfläche Halterung 9
- 12: Einsetzöffnung
- 13: Abbildungsstrahlenbündel ohne Relay-Linse
- 14: Abbildungsstrahlenbündel mit Relay-Linse
- 15: Verriegelung
- 16: Gewindeansatz
- 17: Zylinderrand

## Patentansprüche

1. Schnittweiten-Extender (1) für Fernrohre mit auswechselbaren Okularen, bestehend aus einem zylindrischen Gehäuse (2), das in Lichtrichtung (3) eine erste (4) und eine zweite (5) senkrecht zur Zylinderachse (6) stehende Anschlagebene (4, 5) mit zugehörigen Verbindungselementen (7, 8) zum Fernrohr und zum auswechselbaren Okular aufweist, wobei
das Gehäuse (2) eine in einem Abstand vor der ersten Änschlagebene (4) angeordnete Halterung (9) für eine senkrecht zur Zylinderachse (6) angeordnete Relay-Linse (10) aufweist,
**dadurch gekennzeichnet dass**
a) der Abstand und die Brennweite f der Relay-Linse (10) so gewählt sind, dass eine relativ zur ersten Anschlagebene (4) vorgegebene Objektebene O um den Faktor β' vergrößert in eine Bildebene O' mit gleicher Relativlage zur zweiten Anschlagebene (5) verlagert wird und wobei
b) der Abstand B zwischen der ersten und der zweiten Anschlagebene (4, 5) gleich dem Betrag der Schnittweiten-Verlagerung O-O' ist.

2. Schnittweiten-Extender nach Anspruch 1, **dadurch gekennzeichnet, dass** die Relay-Linse (10) eine negative Brennweite f besitzt.

3. Schnittweiten-Extender nach Anspruch 1 oder 2, **dadurch gekennzeichnet, dass** der Relay-Linse (10) eine Hauptebene H zugeordnet ist.

4. Schnittweiten-Extender nach Anspruch 1 oder 2, **dadurch gekennzeichnet, dass** der Relay-Linse (10) in Lichtrichtung eine erste Hauptebene H und eine zweite Hauptebene H' zugeordnet ist.

5. Schnittweiten-Extender nach Anspruch 3, **dadurch gekennzeichnet, dass** der Abstand s der Hauptebene H der Relay-Linse (10) von der vorgegebenen Objektebene O gleich dem Quotienten f (1-β')/β' ist.

6. Schnittweiten-Extender nach Anspruch 4, **dadurch gekennzeichnet, dass** der Abstand s' der Hauptebene H' der Relay-Linse (10) von der verlagerten Objektebene O' gleich dem Produkt f (1-β')ist.

7. Schnittweiten-Extender nach Anspruch 4 und 6, **dadurch gekennzeichnet, dass** der Abstand der Objektebene O' von der ersten Hauptebene H gleich der Summe s' + ΔHH' ist.

8. Schnittweiten-Extender nach einem der vorhergehenden Ansprüche, **dadurch gekennzeichnet, dass** der Vergrößerungsfaktor β' zwischen dem 1,4- bis 3-fachen, vorzugsweise bei dem 1,8-fachen liegt.

9. Schnittweiten-Extender nach einem der vorhergehenden Ansprüche, **dadurch gekennzeichnet, dass** der Abstand B zwischen 15 und 35 mm, vorzugsweise bei 30 mm liegt.

10. Schnittweiten-Extender nach einem der vorhergehenden Ansprüche, **dadurch gekennzeichnet, dass** f zwischen -20 und -100 mm, vorzugsweise bei -44 mm liegt.

11. Schnittweiten-Extender nach einem der vorhergehenden Ansprüche, **dadurch gekennzeichnet, dass** der Abstand ΔHH' zwischen den Hauptebenen H, H' zwischen 1,0 und 5,0 mm, vorzugsweise bei 3 mm liegt.

12. Schnittweiten-Extender nach einem der vorhergehenden Ansprüche, **dadurch gekennzeichnet, dass** der Abstand der Halterung (9) der Relay-Linse (10) von der ersten Anschlagebene (4) 14 bis 30 mm, vorzugsweise 20 mm beträgt.

13. Schnittweiten-Extender nach einem der vorhergehenden Ansprüche, **dadurch gekennzeichnet, dass** der Abstand der Verbindungselemente (7, 8) von den jeweiligen Anschlagebenen (4, 5) 10 bis 25 mm, vorzugsweise 15 mm beträgt.

14. Schnittweiten-Extender nach einem der vorhergehenden Ansprüche, **dadurch gekennzeichnet, dass** das der ersten Anschlagebene (4) zugeordnete Verbindungselement (7) auf der Außenfläche der Halterung (9) für die Relay-Linse (10) und das der zweiten Anschlagebene (5) zugeordnete Verbindungselement (8) innerhalb des zylindrischen Gehäuses (2) angeordnet ist.

15. Schnittweiten-Extender nach einem der vorhergehenden Ansprüche, **dadurch gekennzeichnet, dass** der Durchmesser der Relay-Linse (10) 10 bis 18 mm, vorzugsweise 14 mm beträgt und die Halterung (9) eine konzentrisch zur Zylinderachse (6) an den Durchmesser der Relay-Linse (10) angepasste Einsetzöffnung (12) für die Relay-Linse (10) aufweist.

## Claims

1. Back focus extender (1) for telescopes with interchangeable eyepieces, consisting of a cylindrical housing (2) which has a first (4) and a second (5) stop plane (4, 5) perpendicular to the cylindrical axis (6) in the light direction (3), with associated connection elements (7, 8) to the telescope and to the interchangeable eyepiece, wherein the housing (2) has a holder (9), arranged at a distance in front of the first stop plane (4), for a relay lens (10) arranged perpendicular to the cylindrical axis (6), **characterized in that**
a) the distance and the focal length f of the relay lens (10) are selected in such a way that an object plane O predetermined relative to the first stop plane (4) is displaced in a manner magnified by the factor β' into an image plane O' with the same relative position in relation to the second stop plane (5) and wherein
b) the distance B between the first and the second stop planes (4, 5) equals the magnitude of the back focus displacement 0-0'.

2. Back focus extender according to Claim 1, **characterized in that** the relay lens (10) has a negative focal distance f.

3. Back focus extender according to Claim 1 or 2, **characterized in that** a principal plane H is associated with the relay lens (10).

4. Back focus extender according to Claim 1 or 2, **characterized in that** a first principal plane H and a second principal plane H' are associated with the relay lens (10) in the light direction.

5. Back focus extender according to Claim 3, **characterized in that** the distance s between the principal plane H of the relay lens (10) and the predetermined object plane O is equal to the quotient f·(1-β')/β'.

6. Back focus extender according to Claim 4, **characterized in that** the distance s' between the principal plane H' of the relay lens (10) and the displaced object plane O' is equal to the product f·(1-β').

7. Back focus extender according to Claims 4 and 6, **characterized in that** the distance between the object plane O' and the first principal plane H is equal to the sum s' + ΔHH'.

8. Back focus extender according to one of the preceding claims, **characterized in that** the magnification factor β' is between 1.4-times and 3-times, preferably 1.8-times.

9. Back focus extender according to one of the preceding claims, **characterized in that** the distance B is between 15 and 35 mm, preferably 30 mm.

10. Back focus extender according to one of the preceding claims, **characterized in that** f is between -20 and -100 mm, preferably -44 mm.

11. Back focus extender according to one of the preceding claims, **characterized in that** the distance ΔHH' between the principal planes H, H' is between 1.0 and 5.0 mm, preferably 3 mm.

12. Back focus extender according to one of the preceding claims, **characterized in that** the distance between the holder (9) of the relay lens (10) and the first stop plane (4) is 14 to 30 mm, preferably 20 mm.

13. Back focus extender according to one of the preceding claims, **characterized in that** the distance between the connection elements (7, 8) and the respective stop planes (4, 5) is 10 to 25 mm, preferably 15 mm.

14. Back focus extender according to one of the preceding claims, **characterized in that** the connection element (7) associated with the first stop plane (4) is arranged on the outer surface of the holder (9) for the relay lens (10) and the connection element (8) associated with the second stop plane (5) is arranged within the cylindrical housing (2).

15. Back focus extender according to one of the preceding claims, **characterized in that** the diameter of the relay lens (10) is 10 to 18 mm, preferably 14 mm, and the holder (9) has an insertion opening (12) for the relay lens (10), which insertion opening is concentric with the cylindrical axis (6) and adapted to the diameter of the relay lens (10).

## Revendications

1. Prolongateur de distance focale (1) destiné à un télescope comportant des oculaires pouvant être échangés, constitué d'un boîtier cylindrique (2), qui comprend des premier (4) et second (5) plans de butée (4, 5) placés perpendiculairement à l'axe de cylindre (6) dans la direction de la lumière (3), comportant des éléments de liaison associés (7, 8) par rapport au télescope et à l'oculaire pouvant être échangé, dans lequel
le boîtier (2) comprend un support (9), disposé de manière espacée du premier plan de butée (4), et destiné à une lentille relais (10) disposé perpendiculairement à l'axe de cylindre (6),
**caractérisé en ce que**
a) l'espacement et la distance focale f de la lentille relais (10) sont sélectionnés de manière à ce qu'un plan objet O prédéterminé soit déplacé de manière agrandie du facteur β' dans un plan image O' par rapport au premier plan de butée (4) avec une position relative identique par rapport au second plan de butée (5) et dans lequel
b) l'espacement B entre les premier et second plans de butée (4, 5) est égal à la valeur du déplacement de focale O-O'.

2. Prolongateur de distance focale selon la revendication 1, **caractérisé en ce que** la lentille relais (10) possède une distance focale f négative.

3. Prolongateur de distance focale selon la revendication 1 ou 2, **caractérisé en ce qu'**un plan principal H est associé à la lentille relais (10).

4. Prolongateur de distance focale selon la revendication 1 ou 2, **caractérisé en ce qu'**un premier plan principal H et un second plan principal H' sont associés à la lentille relais (10) dans la direction de la lumière.

5. Prolongateur de distance focale selon la revendication 3, **caractérisé en ce que** l'espacement s du plan principal H de la lentille relais (10) par rapport au plan objet 0 prédéterminé est égal au quotient f·(1-β')/β'.

6. Prolongateur de distance focale selon la revendication 4, **caractérisé en ce que** l'espacement s' du plan principal H' de la lentille relais (10) par rapport au plan objet O' déplacé est égal au produit f·(1-β').

7. Prolongateur de distance focale selon les revendications 4 et 6, **caractérisé en ce que** l'espacement du plan objet O' par rapport au premier plan principal H est égal à la somme s' + ΔHH'.

8. Prolongateur de distance focale selon l'une quelconque des revendications précédentes, **caractérisé en ce que** le facteur de grossissement β' se situe entre 1,4 et 3 et est de préférence égal à 1,8.

9. Prolongateur de distance focale selon l'une quelconque des revendications précédentes, **caractérisé en ce que** l'espacement B se situe entre 15 et 35 mm et est de préférence égal à 30 mm.

10. Prolongateur de distance focale selon l'une quelconque des revendications précédentes, **caractérisé en ce que** f se situe entre -20 et -100 mm et est de préférence à -44 mm.

11. Prolongateur de distance focale selon l'une quelconque des revendications précédentes, **caractérisé en ce que** l'espacement ΔHH' entre les plans principaux H, H' se situe entre 1,0 et 5,0 mm et est de préférence égal à 3 mm.

12. Prolongateur de distance focale selon l'une quelconque des revendications précédentes, **caractérisé en ce que** l'espacement du support (9) de la lentille relais (10) par rapport au premier plan de butée (4) est de 14 à 30 mm et est de préférence de 20 mm.

13. Prolongateur de distance focale selon l'une quelconque des revendications précédentes, **caractérisé en ce que** l'espacement des éléments de liaison (7, 8) par rapport aux plans de butée respectifs (4, 5) est de 10 à 25 mm et est de préférence de 15 mm.

14. Prolongateur de distance focale selon l'une quelconque des revendications précédentes, **caractérisé en ce que** l'élément de liaison (7) associé au premier plan de butée (4) est disposé sur la surface externe du support (9) destiné à la lentille relais (10) et **en ce que** l'élément de liaison (8) associé au second plan de butée (5) est disposé à l'intérieur du boîtier cylindrique (2).

15. Prolongateur de distance focale selon l'une quelconque des revendications précédentes, **caractérisé en ce que** le diamètre de la lentille relais (10) est de 10 à 18 mm et est de préférence de 14 mm, et **en ce que** le support (9) comprend une ouverture d'insertion (12) destinée à la lentille relais (10), concentrique par rapport à l'axe de cylindre (6) et adaptée au diamètre de la lentille relais (10).
